**Europäisches Patentamt**

**European Patent Office**

**Office européen des brevets**

(19)

(11) Publication number : **0 426 662 B1**

# (12) EUROPEAN PATENT SPECIFICATION

(45) Date of publication of patent specification :
**27.05.92 Bulletin 92/22**

(51) Int. Cl.$^5$ : **G01C 19/56, G01P 9/04**

(21) Application number : **88907036.3**

(22) Date of filing : **23.07.88**

(86) International application number :
**PCT/EP88/00667**

(87) International publication number :
**WO 90/01143 08.02.90 Gazette 90/04**

(54) **APPARATUS FOR MEASURING ANGULAR VELOCITY.**

(43) Date of publication of application :
**15.05.91 Bulletin 91/20**

(45) Publication of the grant of the patent :
**27.05.92 Bulletin 92/22**

(84) Designated Contracting States :
**DE FR GB IT SE**

(56) References cited :
**EP-A- 84 704**

(56) References cited :
**EP-A- 0 161 049**
**US-A- 3 520 195**
**US-A- 4 381 672**
**US-A- 4 703 655**

(73) Proprietor : **ROBERT BOSCH GMBH**
**Postfach 30 02 20**
**W-7000 Stuttgart 30 (DE)**

(72) Inventor : **WINNER, Hermann**
**Im Mehl 3**
**W-7500 Karlsruhe 41 (DE)**

## Description

### State of the Art

The invention relates to apparatus for measuring angular velocity in accordance with the pre-characterizing clause of claim 1.

Conventionally, mechanical gyroscopes have been used for guidance control systems and navigation purposes as well as ring lasers and filament gyros. It is also known from EP-A- 0170378 and DE-A-3417858 to use a tuning fork sensor for measuring the effect of Coriolis acceleration. The limbs of the tuning fork can flex in a direction (y direction) perpendicular to the direction of vibration (x direction) of the limbs towards and away from one another in accordance with the natural frequency of the tuning fork. Upon rotation of the tuning fork about its longitudinal axis (z direction) perpendicular to the x and y axes, Coriolis forces are applied to the vibrating limbs in a direction (y direction) perpendicular to the direction of vibration. The consequential deflections in the y direction are measured electromagnetically or electrostatically in EP-A- 0171378 or piezo-electrically in DE-A-3417858 and the resulting measurement signals are processed electronically to deliver an output indicative of the angular velocity about the z axis. The magnetised metal tuning fork of EP-A- 0171378 has to be manufactured to precise tolerances and the tuning fork and its housing and electromagnetic driver coils are relatively large and the whole apparatus is expensive. The tuning fork of DE-A- 3417858 is miniaturised and comprises a piezo-electric crystal. The apparatus of DE-A- 3417858 therefore lacks robustness. It is an object of the invention to provide a compact yet robust angular velocity measuring apparatus or instrument suitable to replace a conventional gyroscope.

### Advantages of the Invention

The above object is met by apparatus for measuring angular velocity in accordance with the characterising feature of claim 1. The vibratory body need not be made to close tolerances and it can be made of a material chosen for its stress qualities under vibration and under rugged conditions.

Preferably, a mechanical acceleration sensor is used and advantageously it is a micro-sensor.

In order to avoid having to orient the acceleration sensor with extreme precision on the vibratory body, the effect on the latter of the acceleration components of the vibratory motion of the vibrating body itself are suppressed electronically, preferably by using a phase sensitive rectifier connected to the Coriolis acceleration sensor, e.g. via a 90° phase shifter.

It is convenient to use a strain gauge bridge for detecting the vibratory movement of the vibratory body, in the oscillating circuit necessary for maintaining the vibrations at a constant magnitude or amplitude.

Further features of the invention are contained in the dependent claims.

### Drawings

The invention is further described by way of example, with reference to the accompanying drawings, in which:-

Fig. 1 is a diagrammatic sectional view of an angular velocity measuring apparatus or instrument in accordance with the invention;

Fig. 2 is a side view of a vibratory leaf spring of the apparatus;

Fig. 3 is a diagrammatic plan view of the apparatus;

Fig. 4 is a block diagram of the associated electrical and electronic circuitry;

Fig. 5 is a detail diagram of a detail of the circuitry of Fig. 4; and

Fig. 6 is a series of graphs for explaining the operation of the detail circuit shown in Fig. 5.

### Description of the Exemplary Embodiment

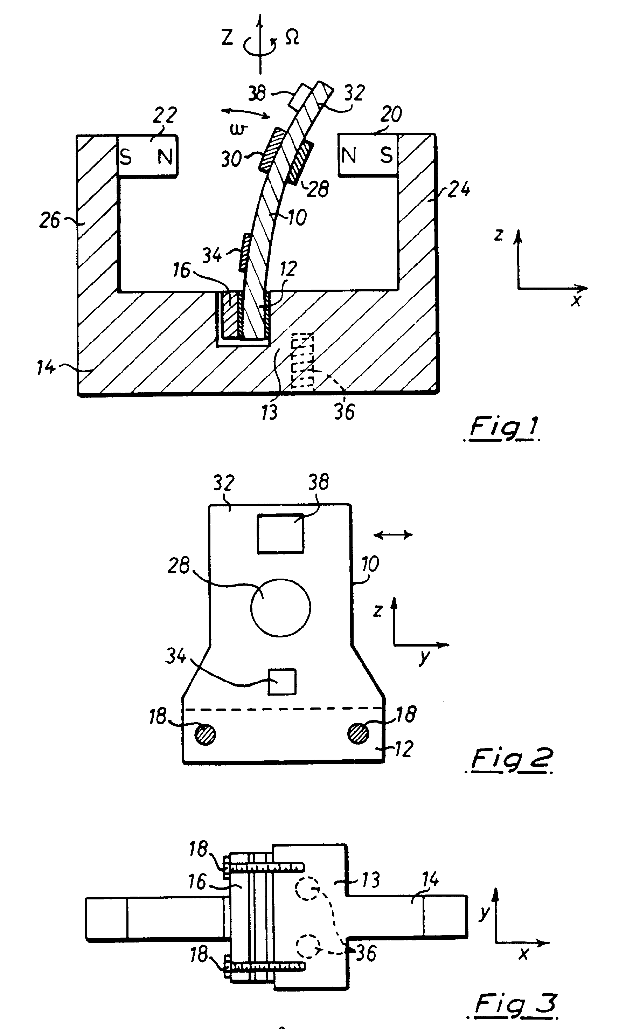

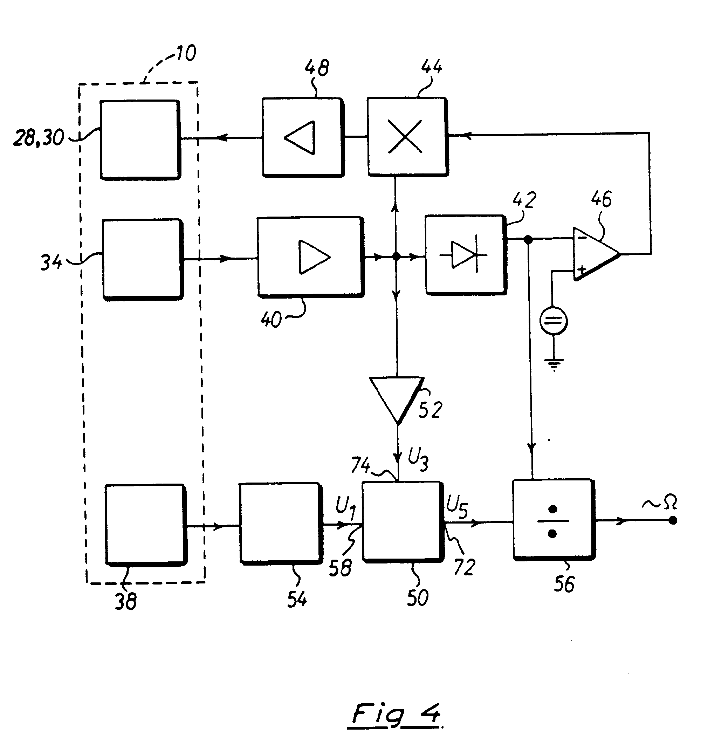

A vibratory body in the form of a leaf spring 10 is clamped by one end 12 to the base 13 of a frame 14 by means of a clamping bar 16 and two screws 18. Permanent magnets 20,22 are secured to upstanding limbs 24,26 respectively, of the frame 14 and co-operate inductively with respective driving coils 28,30, secured to the leaf spring 10 close to its free end 32. A strain gauge bridge 34 is secured to the leaf spring 10 adjacent its fixed end 12. The strain gauge bridge 34 and the driver coils 28,30 are connected in an oscillation circuit, described below with reference to Fig. 4, for maintaining the leaf spring 10 vibrating at a constant amplitude in the x direction parallel to the base 13 of the frame 14 (see Figs. 1 and 3).

Instead of two fixed magnets on the frame and one or two drive coils on the leaf spring, it is possible to have one or two fixed drive coils on the frame co-operating with a permanent magnet on the leaf spring to maintain the oscillations. A further possibility is to secure piezo-electric bimorph strips to the lower end portion of the leaf spring.

In contrast to the known tuning fork type of apparatus, the leaf spring 10 cannot vibrate in the y direction in the plane of the leaf spring (see Figs. 2 and 3). The base 13 of the frame 14 is provided with mounting screw holes 36 by which the apparatus can be mounted in the vehicle or the like to be guided or navigated in response to the angular velocity of the vehicle or the like about a given axis. The apparatus is so mounted that the z direction (see Figs. 1 and 2) lies along that given axis. As is well known, upon rotation or angular movement of the apparatus about the z axis, Coriolis acceleration forces are experienced by the vibrating leaf spring, particularly at its free end 32, in the y direction. In accordance with the invention, the Coriolis acceleration is measured by a micromechanical acceleration sensor 38 which is attached to the free end 32 of the leaf spring 10 so as to sense acceleration in the y direction and the measured Coriolis acceleration is used to calculate the angular velocity about the z axis.

As shown in Fig. 4, the output of the strain gauge bridge 34 is amplified in a bridge amplifier 40 and fed both to a feedback loop comprising a rectifier 42, a control amplifier 46 and a multiplier 44. The output of the rectifier 42, which measures the vibration amplitude, is applied to an amplitude control amplifier 46 where it is compared with a reference voltage and the amplifier output is applied to a second input of the multiplier 44. The output of the latter is fed to a driver amplifier 48 which energizes the drive coils 28,30 with the excitation required to keep the leaf spring 10 vibrating at a constant amplitude which is determined by the reference voltage applied to the operational amplifier 46.

Suppose now that the leaf spring 10 vibrating in the x direction at a frequency $W/2\pi$ and an amplitude $\hat{X}$ is turned about the z axis at an angular velocity $\Omega$. It can be shown that the Coriolis acceleration $a_c$ in the y direction is given by

$$a_c : 2\Omega\dot{x} = 2j \, w\hat{X}e^{jwt},$$

the translatory acceleration at in the x direction is given by

$$a_c = 2\Omega \ddot{x} = 2j \, w\hat{X}e^{jwt},$$

and that the centrifugal acceleration $a_z$ in the z direction, due to the pendulum-like motion of the leaf spring, is given by

$$a_z = \dot{x}^2/\ell = \frac{(w\hat{X})^2}{2\ell} \cdot e^{2jwt}.$$

where $\ell$ is the effective pendulum length

The apparatus is to be used for measuring small angular velocities of $\Omega = 10^{-2}/s$ (=0.6°/s) with a band width of a few tens of Hz. The can only be achieved when the translatory acceleration at is suppressed by a factor of more than $10^5$ and the pendulatory acceleration is suppressed by a factor of about $10^4$. Such a high degree of suppression cannot be achieved mechanically because it would entail the acceleration sensor being oriented to an accuracy of $(1/2000)°$, i.e., 1.8 seconds of an arc. This problem is overcome by using an electronic evaluation circuit as shown in Fig. 4.

The strain gauge signal from the rectifier 40 is used to control the reference input 74 of a phase sensitive rectifier 50 via a sign comparator 52. The Coriolis acceleration signal from the sensor 38 is displaced in phase by 90° in a phase shifter 54 and is measured at the phase sensitive rectifier 50. The phase shifter can be a differentiator when $w \gg w_o$ or an integrator when $w \ll w_o$, where $w_o$ is the natural frequency of the acceleration sensor.

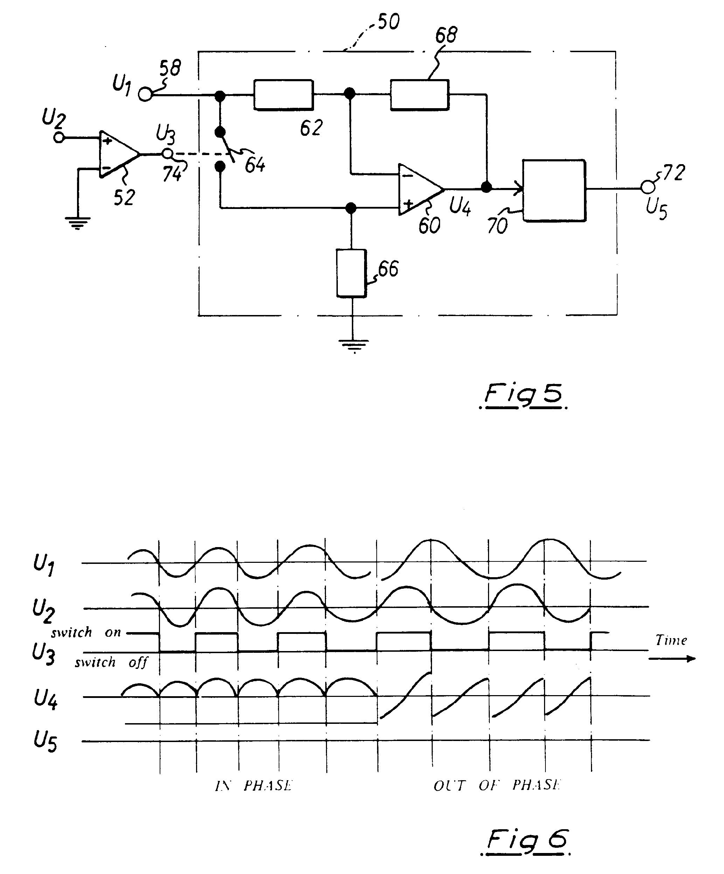

The sign comparator 52 and the phase sensitive rectifier 50 are shown in more detail in Fig. 5. The input signal $u_1$ from the phase shifter 54 is applied to a signal input 58 of the phase sensitive rectifier 50. The latter contains an operational amplifier 60 whose inverting input is connected via a resistor 62 to the signal input 58 and whose non-inverting input is connected via an electronic switch 64 to the signal input 58 and via a resistor 66 to earth. The output of the operational amplifier 60 is connected via a feedback resistor 68 to its inverting input and via a low pass filter 70 to a signal output 72.

The sign comparator 52 produces a digital output $u_3$ from an analog input $u_2$ from the rectifier 40 by comparing the latter with earth potential. The digital output $u_3$ is applied to the reference input 74 which is connected to the control terminal of the electronic switch 64. Fig. 6 shows the signals $u_1$ to $u_5$. It can be seen that $u_1$ signals or components of $u_1$ signals which are 90° out of phase with $u_2$ signals are suppressed whereas $u_1$ signals or components thereof which are in phase with $u_2$ signals result in an output signal $u_5$. It is to be remembered that the $u_1$ signals have themselves been displaced by 90° relative to the output of the Coriolis acceleration sensor 38.

The measured Coriolis acceleration at the output 72 of the phase sensitive rectifier 50 is divided in a divider 56 by a signal representing $\overset{\circ}{x}$, i.e, representing the maximum velocity of the sensor 38 in its movement with the vibratory spring 10. Such a signal is the actual amplitude signal appearing at the output of the rectifier 42. The signal at the output of the divider 56 is thus proportional to the angular velocity $\Omega$ to be measured.

Any fluctuations in the frequency and amplitude of the vibrations can be compensated in the phase shifter 54 or in the divider 56.

If a phase exactness of 0.5° is maintained, a suppression of the translatory acceleration component by a factor of 100 can be achieved.

The apparatus or instrument of the present invention can be made very compact as compared with mechanical gyroscopes and fibre gyros. There are no movable parts between which there is any rubbing contact and the construction is robust. The instrument is simple to calibrate with respect to zeroing and scaling. Temperature compensation is not needed. The instrument is suitable for mass production and this makes it relatively cheap and available for a wide range of uses.

**Claims**

1. Apparatus for measuring angular velocity in which the Coriolis effect on a vibrating body (10) due to rotation of the body about an axis (z axis) transverse to (y axis) the direction of oscillation (x axis), is measured, characterised in that the vibrating body (10) comprises a leaf spring which essentially cannot vibrate in the y-direction and that a separate mechanical Coriolis acceleration sensor (38) which measures the acceleration in the y-direction is disposed on the free vibrating end of the leaf spring (10).

2. Apparatus according to claim 1, characterised in that the acceleration sensor (38) is a micromechanical acceleration sensor.

3. Apparatus according to any preceding claim, characterised in that the vibratory movement of the leaf spring (10) is detected by means of a strain gauge arrangement (34) in a servo control circuit for maintaining the vibrations.

4. Apparatus according to any preceding claim, characterised in that the interference effect of the acceleration (at, az) in the vibratory movement of the vibrating body (10) is suppressed electronically by applying the output of the strain gauge arrangement (34) to a sign comparator (52) whose output is applied to a reference input of a phase sensitive rectifier (50).

5. Apparatus according to any preceding claim, characterized in that the output of the Coriolis acceleration sensor (38) is fed to a signal input of the phase sensitive rectifier (50) via a phase shift circuit (54).

6. Apparatus according to any preceding claim, characterised in that the cyclic driving force for maintaining the vibratory movement is applied to the vibrating body (10) electromagnetically.

7. Apparatus according to any preceding claim, characterised in that, for maintaining the vibratory movement, at least one driving coil (28, 30) is secured to the vibrating body (10) and co-operates with at least one fixed permanent magnet (20, 22).

**Patentansprüche**

1. Meßeinrichtung für die Messung der Winkelgeschwindigkeit, in der der Coriolis-Effekt auf einen schwingenden Körper (10) infolge der Rotation dieses Körpers um eine Achse (z-Achse) senkrecht zur (y-Achse) und der Schwingungsrichtung (x-Achse) gemessen wird, dadurch gekennzeichnet, daß der schwingende Körper (10) eine Blattfeder umfaßt, die in der y-Richtung im wesentlichen keine Schwingungen ausführt, und daß ein getrennt angeordneter mechanischer Coriolis-Beschleunigungssensor (38) auf dem frei schwingfähigen Ende der Blattfeder (10) angeordnet ist, welcher die Beschleunigung in der y-Richtung mißt.

2. Meßeinrichtung nach Anspruch 1, dadurch gekennzeichnet, daß der Beschleunigungssensor (38) ein mikromechanischer Beschleunigungssensor ist.

3. Meßeinrichtung nach einem der vorhergehenden Ansprüche, dadurch gekennzeichnet, daß die Schwingungsbewegung der Blattfeder (10) vermittels einer Dehnungsmeßbrücke (34) erkannt wird, die in einem Reglungskreis für die Aufrechterhaltung der Schwingungsbewegung angeordnet ist.

4. Meßeinrichtung nach einem der vorhergehenden Ansprüche, dadurch gekennzeichnet, daß Interferenzerscheinungen zwischen den Beschleunigungskomponenten (at, az) in der Schwingungsbewegung des schwingenden Körpers (10) elektronisch unterdrückt werden, indem das Ausgangssignal der Dehnungsmeßbrücke (34) einem Vorzeichenkomparator (52) zugeleitet wird, dessen Ausgangssignal wiederum einem Referenzeingang eines phasenempfindlichen Gleichrichters (50) zugeleitet wird.

5. Meßeinrichtung nach einem der vorhergehenden Ansprüche, dadurch gekennzeichnet, daß das Ausgangssignal des Coriolis-Beschleunigungssensors (38) dem Eingangssignalanschluff des phasenempfindlichen Gleichrichters (50) über einen Phasenschieber (54) zugeleitet. wird.

6. Meßeinrichtung nach einem der vorhergehenden Ansprüche, dadurch gekennzeichnet, daß die zyklische Antriebskraft für die Aufrechterhaltung der Schwingungsbewegung dem schwingenden Körper (10) elektromagnetisch zugeführt wird.

7. Meßeinrichtung nach einem der vorhergehenden Ansprüche dadurch gekennzeichnet, daß zur Aufrechterhaltung der Schwingungsbewegung mindestens eine Antriebsspule (28, 30) mit dem schwingenden Körper (10) verbunden ist die mit mindestens einem fest angeordneten Permanentmagneten (20, 22) in Wirkverbindung steht.

**Revendications**

1. Appareil de mesure de vitesse angulaire dans lequel on mesure l'effet de Coriolis sur un corps vibrant (10) du fait de la rotation de ce corps sur un axe (axe z) transversal (axe y) par rapport à la direction d'oscillation (axe x), appareil caractérisé en ce que le corps vibrant (10) comprend une lame de ressort ne pouvant essentiellement pas vibrer dans la direction y, et en ce qu'un détecteur mécanique séparé d'accélération de Coriolis (38) mesurant l'accélération dans la direction y, est monté sur l'extrémité en vibration libre de la lame de ressort (10).

2. Appareil selon la revendication 1, caractérisé en ce que le détecteur d'accélération (38) est un détecteur d'accélération micromécanique.

3. Appareil selon l'une quelconque des revendications précédentes, caractérisé en ce que le mouvement vibratoire de la lame de ressort (10) est détecté au moyen d'un dispositif de jauge de contrainte (34) monté dans un circuit de commande d'asservissement destiné à entretenir les vibrations.

4. Appareil selon l'une quelconque des revendications précédentes, caractérisé en ce qu'on supprime électroniquement l'effet d'interférence de l'accélération (at, az) dans le mouvement vibratoire du corps vibrant (10), en appliquant la sortie du dispositif de jauge de contrainte (34) à un comparateur de signes (52) dont la sortie est appliquée à une entrée de référence d'un redresseur sensible à la phase (50).

5. Appareil selon l'une quelconque des revendications précédentes, caractérisé en ce que la sortie du détecteur d'accélération de Coriolis (38) est appliquée à une entrée de signal du redresseur sensible à la phase (50) par l'intermédiaire d'un circuit de décalage de phase (54).

6. Appareil selon l'une quelconque des revendications précédentes, caractérisé en ce que la force d'entraînement cyclique destinée à entretenir le mouvement vibratoire, est appliquée au corps vibrant (10) électromagnétiquement.

7. Appareil selon l'une quelconque des revendications précédentes, caractérisé en ce que, pour entretenir le mouvement vibratoire, au moins une bobine d'entraînement (28, 30) est fixée au corps vibrant (10) et coopère avec au moins un aimant permanent fixe (20, 22).

_Fig 1_

_Fig 2_

_Fig 3_

_Fig 4_

.Fig 5.

.Fig 6.